# EUROPEAN PATENT SPECIFICATION

(11) **EP 4 132 841 B1**
(45) Date of publication and mention of the grant of the patent: **20.12.2023**
(21) Application number: 21716555.4
(22) Date of filing: 06.04.2021
(51) Int. Cl.: B62L 3/02

(54) **AN ABS ACTUATOR DEVICE FOR A BICYCLE HYDRAULIC BRAKING SYSTEM**
EIN ABS AKTOR FÜR HYDRAULISCHE BREMSE EINES FAHRRADS
DISPOSITIF D'ACTIONNEMENT ANTIBLOCAGE POUR FREIN HYDRAULIQUE DE VÉLO

(30) Priority: 08.04.2020 IT 202000007480
(43) Date of publication of application: 15.02.2023
(73) Proprietor: BLUBRAKE S.P.A., 20122 Milano (IT)
(72) Inventor: PICCIRILLO, Giuseppe, 20122 Milano (IT); TODESCHINI, Fabio, 20122 Milano (IT)
(74) Representative: Notaro, Giancarlo
(86) International application number: PCT/IB2021/052840
(87) International publication number: WO 2021/205334

(56) References cited:
- WO-A1-2019/155371
- JP-A- 2014 148 308
- US-A1- 2010 043 426
- US-A1- 2015 001 018

## Description

### Field of the invention

The present invention relates, in general, to braking systems for bicycles and - in particular - relates to an ABS actuator device for a bicycle hydraulic braking system.

The invention is applicable to any type of bicycle, including bicycles assisted by an electric motor. The application of the invention is not excluded to any other type of cycle, including motorcycles, or electric scooters.

### Prior art

The document WO 2019 155371 A1 illustrates an ABS actuator device for a bicycle hydraulic braking system of the type indicated in the preamble of the attached claim 1.

This known device comprises an actuator body, defining an inner cavity, and having an inlet opening and an outlet opening communicating with the inner cavity. A floating member is slidably mounted in this cavity, carrying a main sealing ring, which is in engagement with the wall of the inner cavity, so as to define an upstream chamber within the cavity, communicating with the inlet opening, and a downstream chamber, communicating with the outlet opening.

The aforesaid inlet and outlet openings are arranged to be hydraulically connected to a pumping device associated with an actuator member of a bicycle brake (for example, a brake lever) and, with a hydraulic device for actuating a bicycle brake (e.g. a disc brake caliper), respectively.

A passage for hydraulic communication between the upstream chamber and the downstream chamber is defined in the body of the floating member. The hydraulic communication through said passage is controlled by a valve member associated with the floating member, which cooperates with a valve seat formed in the body of the floating member. A spring tends to keep the valve member in engagement against the valve seat, in a closed position wherein the hydraulic communication between the upstream chamber and the downstream chamber is interrupted.

The aforesaid actuator device also comprises an electric motor configured to control the position of the floating member within the cavity of the actuator body.

During normal operation of the bicycle brake, the electric motor is inactive and the floating member is in an end position, in the direction of the downstream chamber, wherein the valve member of the floating member interacts with an abutment element of the actuator body, which keeps the valve member in an open position, spaced apart from its valve seat, against the action of the spring.

Therefore, during normal operation of the brake, the floating member remains in this end position, and the fluid pumped by the brake lever can flow from said inlet opening to said outlet opening, through the passage left open by the aforesaid valve member, to then arrive at the brake caliper.

Conversely, in conditions wherein ABS activation is required, the electric motor is activated (by an electronic controller that receives signals from one or more sensors and processes them according to a predetermined algorithm to detect, for example, when the front wheel of the bicycle is about to lock, or when the rear wheel is about to lift off the ground). In this condition, the electric motor commands a movement of the floating member in the direction of the upstream chamber and away from the aforesaid end position. In this condition, the valve member is brought into its closed position by the spring, so that the communication between the upstream and downstream chambers is interrupted. At the same time, the movement of the floating member in the direction of the upstream chamber generates an increase in the volume of the downstream chamber, which gives rise to a decrease in the pressure of the fluid supplied to the brake caliper and, consequently, to a decrease in the braking action, which allows locking of the wheel to be avoided.

The aforesaid known device also comprises a valve device configured to open the communication between the upstream chamber and the downstream chamber when the pressure in the downstream chamber becomes greater than the pressure in the upstream chamber, by a differential greater than a predetermined threshold, More precisely, in the case of the known device, this valve device consists of the aforesaid main sealing ring, which is configured with an elastically deformable circumferential sealing lip. The lip is configured in such a way that it normally remains in sealing engagement against the wall of the cavity of the body of the actuator device, isolating the upstream chamber from the downstream chamber. However, when the pressure in the downstream chamber becomes greater than the pressure in the upstream chamber by a differential greater than a predetermined threshold, the lip deforms, moving away from the wall of the cavity of the actuator device, and opening the communication between the two chambers, which then return to the same pressure.

In the known device, the aforesaid predetermined threshold of the pressure differential that causes the lip to open, by construction, is always less than the force exerted by the spring of the valve member inside the floating member, and this is why it is the lip gasket that has the function of placing the two chambers in communication in the case of overpressure.

### Technical problem

Studies and experiments carried out by the Applicant have shown that the aforesaid known device has the drawback of involving the use of the aforesaid sealing ring with lip, which constitutes a relatively critical component, due to the stringent manufacturing and assembly specifications it requires, and also for the stringent specifications of roughness and machining of the cylindrical cavity into which it flows. The assembly and setup of the sealing ring with lip are relatively complex, not very repeatable and require the use of dedicated equipment. Another drawback lies in the problem of complexity and high production cost of the floating member.

### Object of the invention

The object of the present invention is to overcome the drawbacks of the prior art.

More generally, the object of the invention is to produce an actuator device - of the type indicated above - which is constructively simple, less expensive than the prior art device, and yet fully efficient and reliable in operation.

### Summary of the invention and its advantages

In order to achieve this object, the invention relates to an actuator device having the characteristics of the attached claim 1.

Compared to the known device described above, the device according to the invention is mainly characterized in that:
- the aforesaid main sealing ring is not a ring with a lip, and always remains engaged against the wall of the cavity of the actuator body, so as to always isolate the upstream chamber with respect to the downstream chamber, in any operating condition of the bicycle brake,
- the valve device configured to open the communication between the upstream chamber and the downstream chamber, when the pressure in the downstream chamber becomes greater than the pressure in the upstream chamber, is constituted only by the valve member associated with the floating member,
said valve member being configured in such a way that, when it is in its closed position, with the floating member spaced apart from said end position, the valve member has a surface exposed to the downstream chamber, so that a pressure increase in the downstream chamber sufficient to overcome the action of said at least one spring causes the valve member to move away from its valve seat and the opening of the communication through the aforesaid passage in the floating member.

Thanks to the aforesaid characteristics, the actuator device according to the invention is able to definitively solve the problems of the prior art, avoiding the use of the lip sealing ring and the resulting drawbacks. This is achieved by the fact that the valve member associated with the floating member of the actuator device is able to perform a double function, that is: its known function, consisting in establishing communication between the upstream and downstream chambers during normal operation of the braking system, when the floating member is in its end position, and the function that - in the known device - is performed by the lip of the lip sealing ring, i.e. establishing the aforesaid communication when the pressure in the downstream chamber tends to become greater than the pressure in the upstream chamber. To this end, the characteristics and assembly of the spring associated with the valve member of the floating member are predetermined to define the overpressure threshold in the downstream chamber that generates the opening of the communication.

### Additional characteristics of the invention

Additional preferred and advantageous characteristics of the invention are described in the attached drawings.

According to a first option, which forms the object of the invention, even independently of the characteristics of the characterizing part of claim 1, the actuator device of the invention is provided with a solenoid valve configured to place in direct communication, when activated, the inlet opening of the actuator device with the outlet opening (communicating, respectively, with said upstream and downstream chambers), in such a way that said solenoid valve can be controlled by an electronic control unit of the bicycle braking system to establish said communication each time that an operating anomaly of the actuator device is detected by said electronic control unit; in this way additional safety is obtained on the fact that the braking system is always able to operate correctly, ensuring communication between the inlet opening and the outlet opening, and the integrity of the hydraulic circuit that connects the pumping device operated by the brake lever with the hydraulic cylinder actuator of the brake caliper.

According to another option, which forms the object of the invention, even independently of the characteristics of the characterizing part of claim 1, the actuator device of the invention is provided with a pressure sensor arranged to detect the pressure in said upstream chamber or in said downstream chamber, in such a way as to allow the electronic control unit of the braking system to have direct control over the pressure of the fluid entering or leaving the actuator device. In this way, the electronic control unit may have a more direct control over the correct functioning of the braking system, and can intervene more promptly in the event of any malfunction that endangers the operation of the brake.

According to another option, which forms the object of the invention, even independently of the characteristics of the characterizing part of claim 1, the aforesaid inlet and outlet openings of the actuator device of the invention are arranged on opposite sides of the body of the actuator device, and are provided with respective connecting elements with outlets at 90 degrees with respect to the respective openings in the body of the actuator device. At least one of said connecting elements may be selectively oriented into two different positions, offset from each other by 180 degrees, in such a way that the two outlets of the connecting elements may both be oriented parallel to the axis of the floating member of the actuator device, and both facing towards one end of the body of the actuator device or towards opposite ends of the body of the actuator device. Thanks to this characteristic, the actuator device of the invention can be easily configured to have the inlet and outlet tubes of the fluid that leave the actuator device in the same direction, or from opposite ends, which allows great flexibility in the choice of mounting position of the actuator device on the bicycle. For example, the actuator device can be mounted vertically on one of the two arms of the front fork of the bicycle, adjacent to the caliper of a disc brake, with the tubes protruding from opposite ends, or it can be mounted at a distance from the brake, for example, on the upper longitudinal tube of the bicycle frame (or even inside it), with the tubes for the fluid coming out from the front end of the body of the actuator device).

### Detailed description of preferred embodiments of the invention

Further characteristics and advantages of the invention will become apparent from the description that follows with reference to the attached drawings, provided purely by way of non-limiting example, wherein:
- Figure 1 is a partial top view of a bicycle using the actuator device according to the invention, with the actuator device mounted inside the upper longitudinal tube of the bicycle frame,
- Figure 2 is a perspective view showing a detail of the front wheel of the bicycle of Figure 1, with the actuator device mounted vertically on one of the two arms of the front fork of the bicycle,
- Figure 3 is a detail of a cross-sectioned side view of the bicycle of Figure 1, with the actuator device mounted inside the upper longitudinal tube of the bicycle frame.
- Figure 4 is a cross-sectional view of an embodiment of the actuator device of the invention, illustrated in an operating condition of normal operation of the braking system, i.e. with inactive ABS,
- Figure 5A illustrates a detail on an enlarged scale of Figure 4,
- Figure 5B illustrates the detail of Figure 5A in the ABS activation condition,
- Figure 6 is a cross-sectional view of another embodiment of the actuator device of the invention,
- Figure 7 is a cross-sectional view of the device of Figure 6, on an enlarged scale,
- Figure 8 illustrates a detail of Figure 7, in a further enlarged scale,
- Figure 9 illustrates another detail on an enlarged scale of Figure 4, with reference to another aspect of the invention,
- Figure 10 is a perspective view of a component of the actuator device that is illustrated in Figure 9,
- Figure 11 is a detail of a cross-sectional view of the actuator device, according to another embodiment,
- Figure 12 is a perspective view of the detail of Figure 11 and,
- Figures 13 and 14 are perspective views showing two alternative configurations of the actuator device according to the invention.

### General characteristics of the actuator device and installation on the bicycle

In the drawings, the reference number 1 indicates - in its entirety - a bicycle including a braking system equipped with an ABS actuator device according to the invention.

In the present invention, the term ABS is used according to its conventional meaning in the art, that is, with reference to an Anti-Blocking System configured to reduce the action of a brake on a wheel when, during braking, the wheel tends to lock up. Devices of this type have been widespread for a long time in the field of motor-vehicles, but for some years they have also found increasing application in the field of bicycles, including electric bicycles, and in the field of light electric vehicles.

The actuator device according to the invention, which in the attached drawings is indicated with the reference number 2, has been conceived and developed by the Applicant with particular reference to the application on a bicycle of any type, including electric or assisted-pedaling bicycles and has characteristics that make it particularly advantageous in the case of such an application.

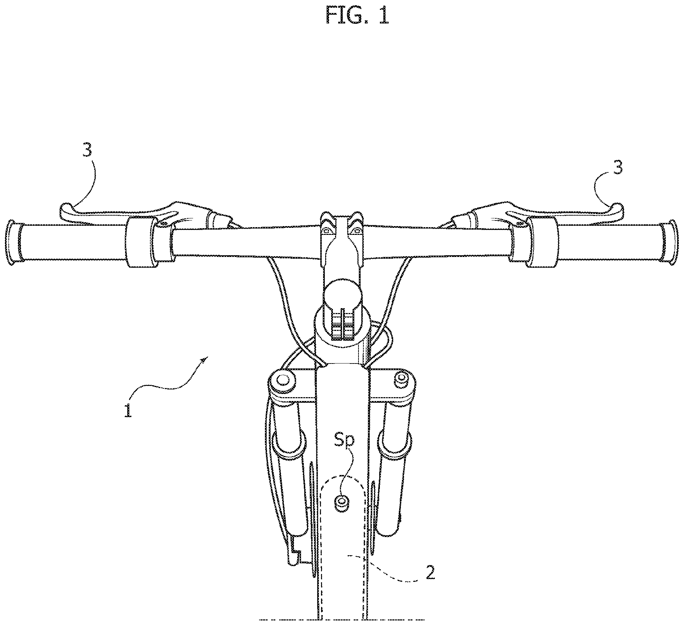

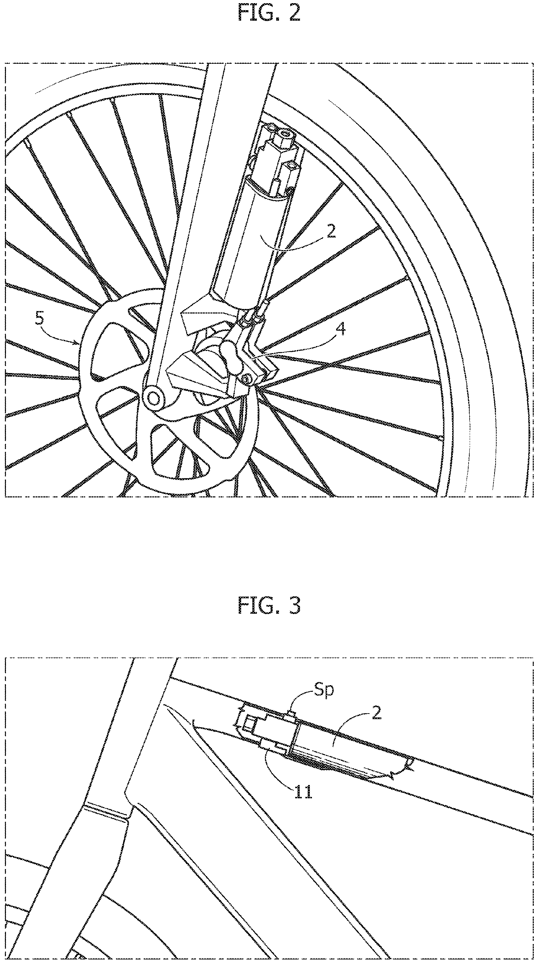

The drawings show, purely by way of example, some embodiments of the actuator device 2, and its possible arrangements on the bicycle. In general, the actuator device 2 is interposed in the hydraulic connection between a pumping device (not visible in the drawings) of any known type associated with the brake control member (for example, the lever 3 for actuating the front brake of the bicycle - see Figure 1), and an actuation device of the brake (for example, the caliper 4 of a disc brake 5 - see Figure 2) associated with the front wheel R of the bicycle.

As will be described in detail below, the actuator device 2 is configured in such a way as to leave ample flexibility in envisaging its positioning on the bicycle. For example, it may be mounted on one of the two arms of the front fork of the bicycle, adjacent to the front disc brake controlled by it (Figure 2), or, again for example, it may be mounted inside the upper longitudinal tube of the frame of the bicycle (Figure 3), by providing a closed opening with a cover in the tube of the frame, or by providing mounting starting from one end of the frame tube, during manufacture and assembly of the frame.

### Connecting elements adaptable to the type of installation

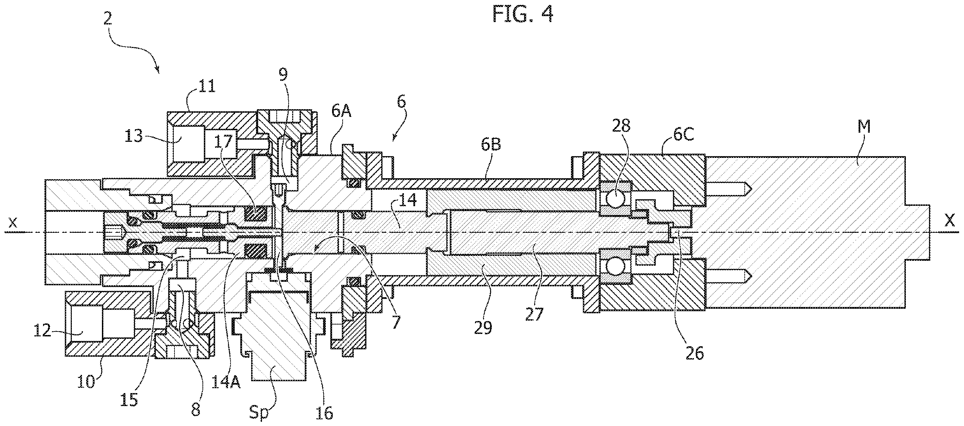

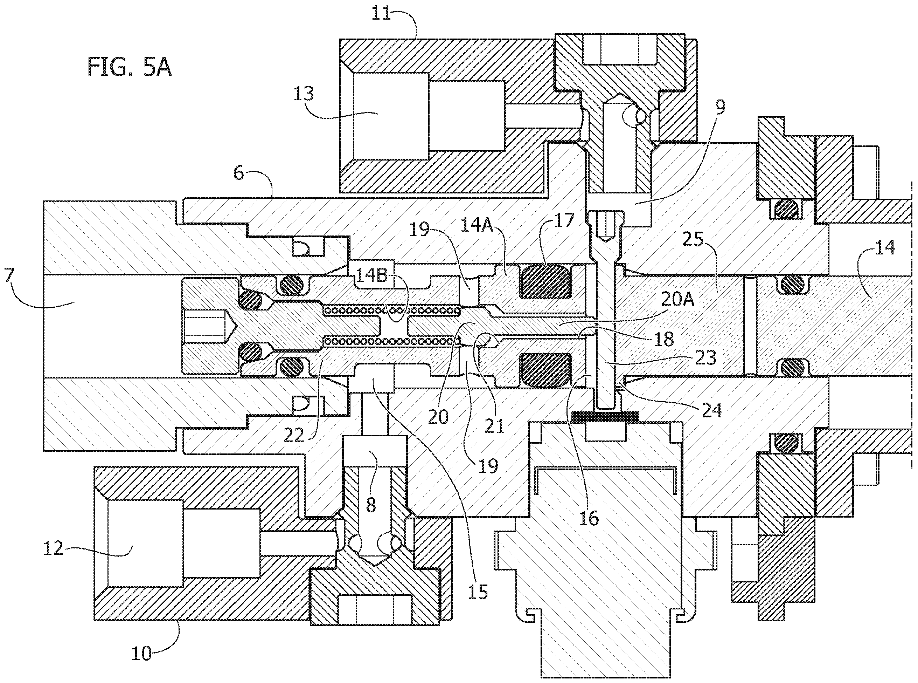

With reference to Figure 4 and Figure 5A, in the embodiment illustrated therein, the actuator device 2 comprises a substantially elongated body 6 within which an inner cavity 7 is formed. The body 6 of the actuator device has an inlet opening 8 and an outlet opening 9, both communicating with the inner cavity 7, and formed on opposite sides of the body 6. In the example illustrated, the inlet and outlet openings 8, 9 are defined by holes directed radially and orthogonally with respect to the X-X axis of the body 6.

Two connecting elements 10, 11 with outlets 12, 13 oriented at 90 degrees with respect to the openings 8, 9, i.e. oriented parallel to the X-X axis, are associated with the inlet and outlet openings 8, 9. The inlet opening 8 is intended to be connected, for example, by means of a flexible tube, to the pumping device controlled by the brake lever 3, while the outlet opening 9 is intended to be connected, for example, by means of a flexible tube, to the hydraulic cylinder actuator (not visible in the drawings) of the brake caliper 4.

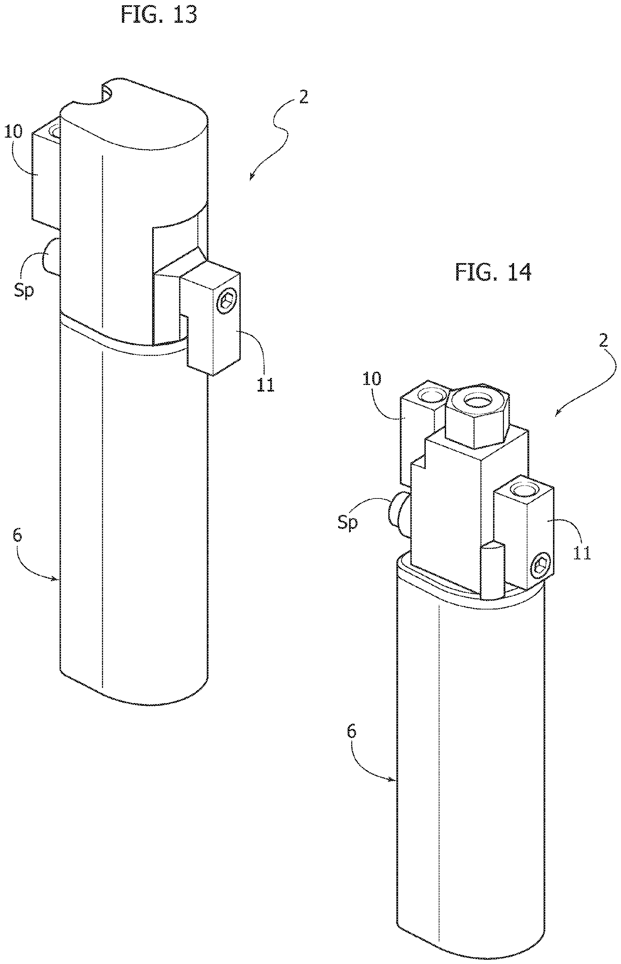

As is also visible in Figures 13 and 14, at least one of the connecting elements 10, 11 is selectively orientable into two different positions, offset from each other by 180 degrees, in such a way that the two outlets 12, 13 of the connecting elements may both be oriented parallel to the X-X axis of the actuator device, and both facing towards one end of the body of the actuator device or towards opposite ends of the body of the actuator device.

Thanks to this characteristic, the actuator device of the invention can be easily configured to have the inlet and outlet tubes of the fluid that come out from the same end of the body of the actuator device, or from opposite ends, which allows great flexibility in the choice of mounting position of the actuator device on the bicycle. For example, as already indicated above, the actuator device 2 may be mounted vertically on one of the two arms of the front fork of the bicycle (Figure 2); adjacent to the caliper 4 of the disc brake 5, with the tubes protruding in opposite directions; or it can be mounted at a distance from the brake, for example, inside the upper longitudinal tube of the bicycle frame (Figure 3), with the tubes for the fluid both coming out from the front end in the same direction.

### Floating member and main sealing ring

With reference again to Figures 4 and 5A, a floating member 14 is slidably mounted within the inner cavity 7 of the body 6, said floating member having an elongated cylindrical body, with a portion 14A of larger diameter, configured in such a way as to define an upstream chamber 15 inside the cavity 7, communicating with the inlet opening 8 (and, consequently, in the condition of use, with the outlet of the pumping device operated by the brake lever 3), and a downstream chamber 16, communicating with the outlet opening 9 (and consequently, in the aforesaid condition of use, with the inlet of the hydraulic cylinder of actuation of the brake caliper 4). The two chambers 15, 16 are isolated from each other by a main sealing ring 17 mounted in a circumferential groove of the portion 14A of the floating member 14. The sealing ring 17, made of any elastomeric material suitable for the purpose, is configured to be permanently in engagement against the wall of the cavity 7, whatever the axial position of the floating member 14 within the cavity 7, so as to always isolate the chambers 15, 16 from each other. In the drawings, the sealing ring 17 is illustrated in the non-deformed configuration, which it assumes when it is free. In reality, being compressed radially between its seat in the floating member 14 and the wall of the cavity 7, the sealing ring 17 assumes a flattened configuration, with its outer surface in contact with the wall of the cavity 7 for an extended portion axially.

The upstream and downstream chambers 15, 16 have a volume that varies according to the axial position of the floating member 14 within the cavity 7. In Figures 4, 5A, the portion 14A of the floating member is in its end position in the direction of the downstream chamber 16 (towards the right, with reference to the drawings), so that the downstream chamber 16 is in the minimum volume condition.

### Valve member associated with the floating member

With reference - in particular - to Figure 5A, which illustrates a detail on an enlarged scale of Figure 4, the body of the floating member 14 has an axial through-hole 18 and radial holes 19 that define a passage inside the body of the floating member, which connects the upstream chamber 15 with the downstream chamber 16. Communication through this passage is controlled by a valve member 20 slidably mounted within an axial cavity 14B of the body of the floating member 14. The valve member 20 cooperates with a valve seat 21 defined in the cavity 14A formed in the body of the floating member.

In the example illustrated, the valve seat 21 is defined by a conical connecting surface between the axial hole 18 and the axial cavity 14A, which has a diameter greater than the diameter of the hole 18. The valve member 20 has a larger diameter portion, which has a conical surface cooperating with the conical valve seat 21.

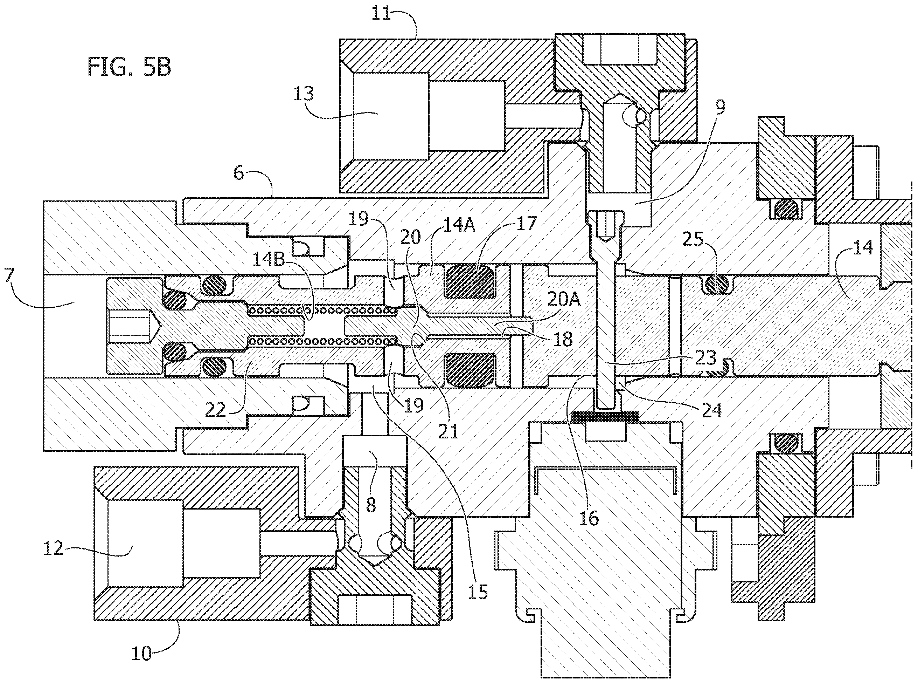

A spring 22 tends to keep the valve member 20 in a closed position, with the conical surface of the valve member 20 in contact with the conical valve seat 21. In this condition (visible in Figure 5B), the communication between the chambers 15, 16 through the passage inside the floating member is interrupted. In the example, the spring 22 is a helical spring surrounding a reduced diameter rod of the valve member 20 and axially interposed between an abutment surface of the valve member and a closing element screwed into one end of the cavity 14A.

The body of the valve member 20 extends beyond its conical surface with an axial rod 20A, which is inserted through the through-hole 18 of the body of the floating member 14. The rod 20A has a smaller diameter than the diameter of the hole 18, so that the conical surface of the valve member 20 is subjected to the pressure established in the downstream chamber 16.

Figures 4 and 5A show the floating member 14 in the aforesaid end position (to the right, with reference to the drawings), wherein the portion 14A is in its position of maximum displacement towards the downstream chamber 16. This end position is defined by the engagement of the floating member against an abutment surface 24 defined in the wall of the cavity 7.

In the aforesaid end position, the tip of the rod 20A, which protrudes out of the end of the hole 18, interacts with an abutment element carried by the body 6 of the actuator device, so that - in this condition - the valve member 20 is kept in an open position, with its conical surface spaced apart from the conical seat 21, against the action of the spring 22.

In the illustrated example, the abutment element is a transverse pin 23 carried by the body 6 and extending transversely through the cavity 7 of the body 6 and through a slot 25 in the body of the floating member 14.

Therefore, in the end position of the floating member, which is illustrated in Figures 4 and 5A, which corresponds, as will be better illustrated below, to the normal operating condition of the bicycle braking system (i.e. when there is no intervention request of the ABS), the upstream chamber 15 and the downstream chamber 16 communicate with each other, so that an intervention by the cyclist on the brake lever 3 causes the transfer of fluid from the pumping device associated with the brake lever 3 to the inlet opening 8 and to the upstream chamber 15, from this to the downstream chamber 16 and from this to the outlet opening 8, and to the hydraulic cylinder actuating the brake caliper 4, which therefore exerts its braking action on the wheel, while the floating member 14 remains permanently in the aforesaid end position.

### Actuation of the ABS

With reference to Figure 4, the actuator device 2 comprises an electric motor M configured to control the axial position of the floating member 14 within the cavity 7 of the body 6.

In the example illustrated, the electric motor is mounted coaxially to one end of the body 6 of the actuator device. Again in the case of this non-limiting example, the actuator body has three portions 6A, 6B and 6C arranged axially in series and rigidly connected to each other, for example, by screws. The portion 6A contains the components of the hydraulic system of the actuator device that have been described above. The portion 6B is in the form of a tube and constitutes an extension element to which the portion 6C is secured, in the form of a ring, to which the body of the electric motor M is, in turn, secured. Again, these details are provided here only for a better understanding of the illustrated example, but should not be interpreted in a limiting sense, since the construction details and the embodiments may vary widely.

The electric motor M has a crankshaft 26, which is connected in rotation with a screw 27 arranged coaxially with the floating member 14. The screw 27 is rotatably mounted within the body portion 6C by means of a rolling bearing 28, and is held by the bearing 28 (in the manner which will be described in detail below) in a fixed axial position. The screw 27 is engaged within the inner thread of a nut 29, which is guided within the portion 6B so as to be free to slide axially, but prevented from rotating. In this way the nut 29 moves axially due to a rotation of the screw 27. The nut 29 is rigidly connected to the floating member 14. Therefore, thanks to the arrangement described above, the electric motor M is able to control the axial position of the floating member 14.

During normal operation of the bicycle braking system, when there is no request for intervention of the ABS, the electric motor M is inactive and the floating member 14 is in the end position of Figures 4 and 5A, wherein the valve member 20 is maintained by engagement against the transverse pin 23 in its open position, with its conical surface spaced apart from the conical seat 21, so that, as already described above; an intervention on the brake lever 3 causes the transfer of fluid through the actuator device 2 to the actuator cylinder of the brake caliper 4. In this condition, the fluid enters and exits the actuator device, thanks to the communication between the upstream chamber 15 and the downstream chamber 16 established by the open condition of the valve member 20.

On the other hand, in a condition wherein there is a request for intervention of the ABS, the electric motor M is activated in such a way as to control a movement of the floating member 14 and of its portion 14A in the direction of the upstream chamber 15 and away from said end position, so that the valve member 20 is carried into its closed position by the spring 22, so as to interrupt the communication between the upstream chamber 15 and the downstream chamber 16 (see Figure 5B). In this condition, the downstream chamber 16 increases in volume, generating a decrease in the pressure of the fluid supplied to the brake caliper 4 and, consequently, a decrease in the braking action that allows locking of the wheel to be avoided. According to a technique known per se, the request for intervention of the ABS may be generated by an electronic control unit of the braking system, which is configured to receive signals from one or more sensors indicative of the operating conditions of the bicycle (for example, from an angular speed sensor of the wheel), and which is programmed to control the electric motor as a function of these signals, when they are indicative of an incipient locking of the wheel following braking.

### Pressure limiting device in the downstream chamber

The actuator device 2 is arranged to open the communication between the upstream chamber 15 and the downstream chamber 16 when the pressure in the downstream chamber 16 becomes greater than the pressure in the upstream chamber, by a differential greater than a predetermined threshold.

In the device known from WO 2019 155371 A1**,** this function is performed by the main sealing ring associated with the floating member, which is configured with an elastically deformable circumferential sealing lip. The lip is configured in such a way that it normally remains in sealing engagement against the wall of the inner cavity of the floating member, isolating the upstream chamber from the downstream chamber. However, when the pressure in the downstream chamber becomes greater than the pressure in the upstream chamber by a differential greater than a predetermined threshold, the lip deforms, moving away from the wall of the cavity of the floating member and opening the communication between the two chambers, which then return to be at the same pressure.

As seen, in the actuator device 2 according to the invention, the main sealing ring 17 is not in the form of a sealing ring with a deformable lip, and is always engaged against the wall of the cavity 7 of the body 6 of the actuator device, so as to always isolate the upstream chamber 15 from the downstream chamber 16, in any operating condition of the bicycle brake. The function of opening the communication between the upstream chamber 15 and the downstream chamber 16 when the pressure in the downstream chamber becomes greater than the pressure in the upstream chamber is, instead, fulfilled by the valve member 20 associated with the floating member.

As illustrated above, the valve member 20 is configured in such a way that, when it is in its closed position, with the floating member 14 spaced apart from its end position (Figure 5B), it has its conical surface exposed to the downstream chamber 16, so that an increase in pressure in the downstream chamber sufficient to overcome the action of the spring 22 causes the conical surface of the valve member 20 to move away from its valve seat 21 and the opening of communication through the hole 18.

The load of the spring 22 may be arranged in order to set the pressure differential between chamber 16 and chamber 15, which causes the opening of the communication. It is also possible to envisage the possibility of adjusting the load of the spring 22 by providing an adjustable abutment member, for supporting the end of the spring 22 opposite to the end of the spring that acts on the valve member 20.

### Safety solenoid valve

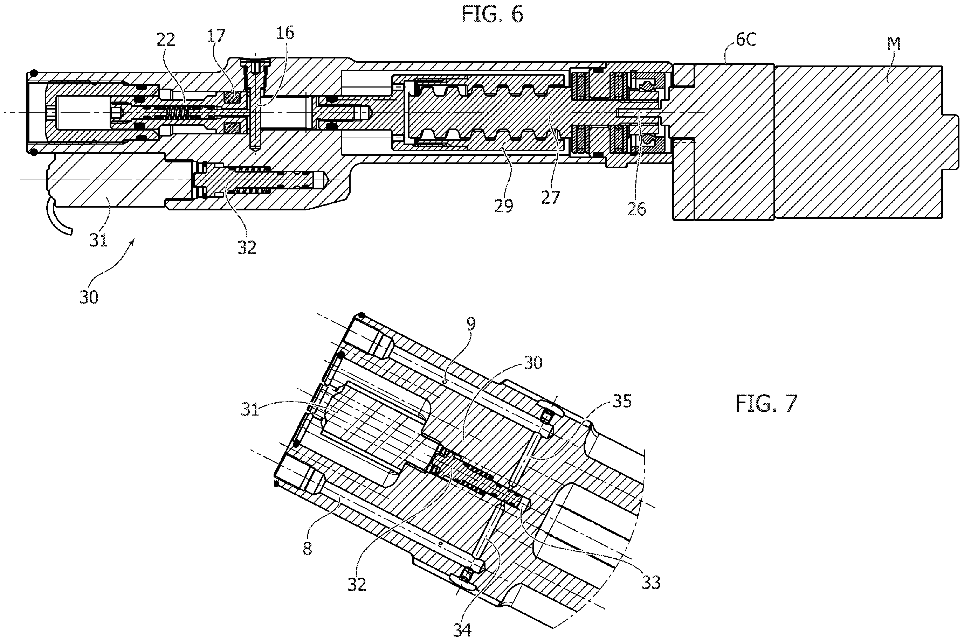

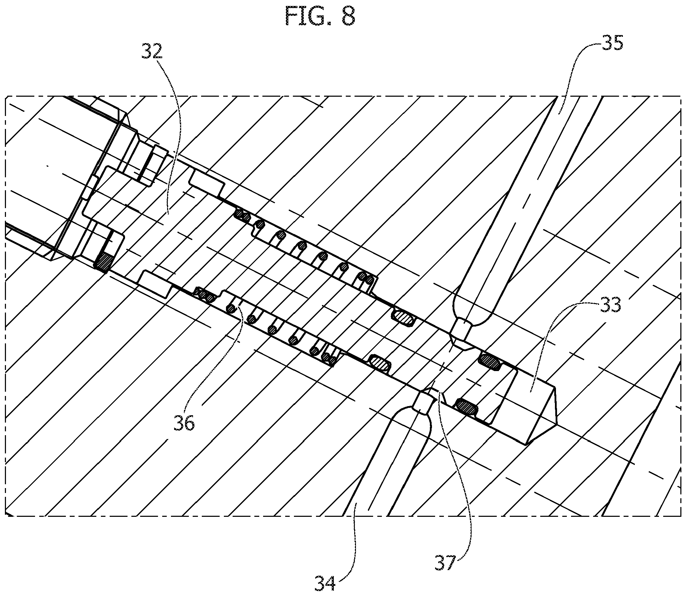

According to another aspect, which forms the object of the invention even independently of the characteristics of the characterizing part of claim 1, the actuator device 2 is provided with a solenoid valve 30 (Figures 6-8) configured, when activated, to place the inlet opening 8 of the actuator device into direct communication with the outlet opening 9.

The solenoid valve 30 may be controlled by an electronic control unit of the bicycle braking system to establish said communication whenever an operating anomaly of the actuator device is detected by the electronic control unit, for example, when the floating member remains erroneously locked in an ABS activation position, i.e. in a position such as that illustrated in Figure 5B. This provides additional safety that the braking system is always able to operate correctly, ensuring braking capability.

It should be noted that the provision of the safety solenoid valve eliminates the need, provided in devices of the prior art, of a reversible transmission between the electric motor and the floating member, such as to allow, if the floating member stops due to a fault, the fluid pressure generated by the brake lever to be able to move the floating member backwards. The adoption of a reversible transmission requires stringent quality controls and the use of an expensive production screw.

Figures 6-8 refer to an embodiment that is constructionally slightly different from that of Figure 4 (for example, regarding the positioning of the inlet and outlet openings 8, 9), but similar in substance. In Figure 6, the parts corresponding to those of Figures 4 are indicated by the same reference numbers.

In the illustrated example, the solenoid valve 30 includes a solenoid 31 that controls a slide valve member 32, slidably mounted in a cylindrical cavity 33 formed in the body 6 of the actuator device 2, parallel to and at a distance from the cavity 7 within which the floating member 14 is slidably mounted. The slide member 32 has a circumferential groove 37 which - in the position illustrated - intercepts the ends of two ducts 34, 35 formed in the body 6 and, respectively, communicating with the inlet and outlet openings 8, 9 (the cross-section of Figure 7 is taken in two radial planes with respect to the axis of the cavity 33, forming an angle of less than 90° between them). A helical spring 36 normally keeps the slide member 32 in a end position, wherein the groove 37 is axially spaced apart from the ends of the ducts 34, 35, so there is no communication between these ducts.

When the electronic unit detects an anomalous situation that requires the solenoid, it activates the solenoid 31 to attract the slide member 32 into the position illustrated in the drawings, against the action of the spring 36, so as to establish communication between the ducts 34, 35 and consequently between the inlet and outlet openings 8, 9 of the actuator device. In this way, if, for example, the floating member remains locked in an ABS activation position, despite the ABS intervention not being necessary, the braking system is able to operate correctly, ensuring that the fluid can pass from the pumping device operated by the brake lever 3, up to the brake caliper 4, passing through the actuator device 2.

### Electric motor-screw connection

According to another aspect, which forms the object of the invention even independently of the characteristics of the characterizing part of claim 1, the actuator device 2 provides, as indicated above, a screw-and-nut transmission 27, 29 (see Figure 4) between the electric motor M and the floating member 14. As also indicated above, this transmission includes a screw 27 rotatably mounted by means of a rolling bearing 28 within the body of the actuator device, and axially locked with respect to said rolling bearing.

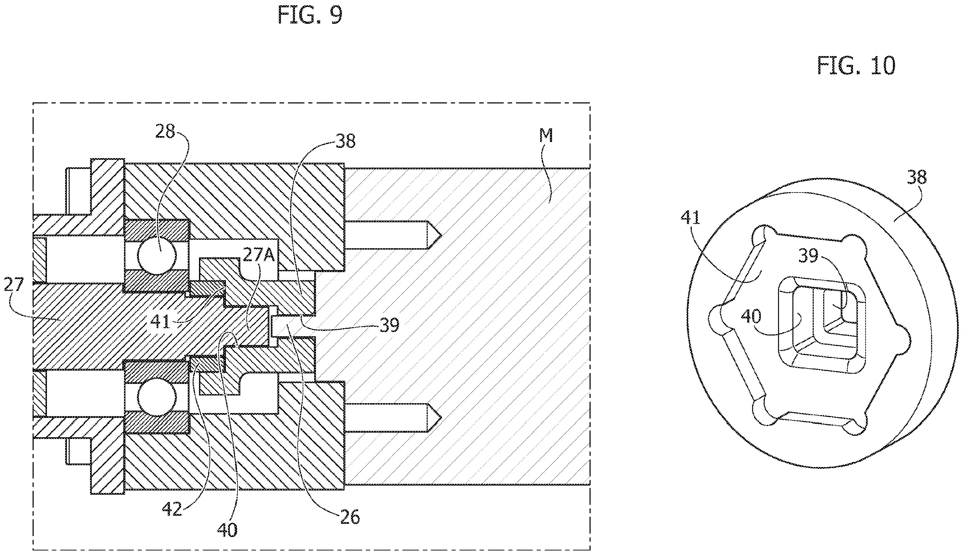

With reference to the embodiment of Figures 9, 10, the screw 27 is connected in rotation with the shaft 26 of the electric motor M by means of a bushing 38.

The bushing 38 has a bell-shaped conformation, with an axial hole having a first shaped portion 39 (in the example, square) for shape-coupling with the crankshaft 26, which has a corresponding shaped conformation.

The aforesaid axial hole of the bushing 38 has a second shaped portion 40 (in the example, square), wider than the section 39 for shape-coupling with an end nose 27A of the screw 27, having a corresponding conformation.

Finally, the axial hole of the bushing 39 opens into a shaped front cavity 41 (in the example hexagonal) for shape-coupling with a tightening nut 42, which is screwed onto a threaded portion of the end nose of the screw to lock the inner ring of the bearing 28 against an annular shoulder of the screw 27,

In this way, the bushing 39 is secured in rotation both with the shaft 26 of the electric motor M and with the screw 27, and also with the tightening nut 42, so that any risk of loosening the nut 42 is safely prevented.

### Pressure sensor on the downstream side

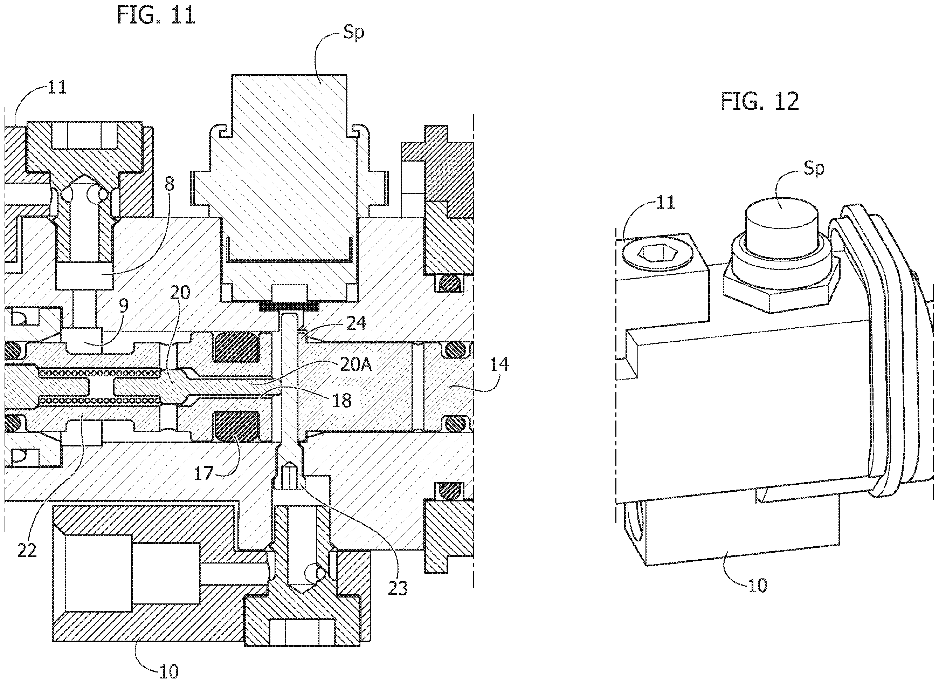

According to another aspect, which forms the object of the invention even independently of the characteristics of the characterizing part of claim 1, the actuator device 2 is provided with a pressure sensor S_{P} arranged to detect the pressure in the upstream chamber 15 or, as in the case illustrated in the drawings, in the downstream chamber 16 (see Figures 4, 11, 12) in such a way as to allow the electronic control unit of the braking system to have a direct control over the fluid pressure. In this way, the electronic control unit may have a more direct control over the correct functioning of the braking system, and can intervene more promptly in the event of any malfunction that endangers the operation of the brake.

In the example illustrated, the support body of the sensor S_{P} is screwed into a seat formed in the body 6. The pressure signal output from the sensor S_{P} is used by the electronic control unit to enable an ABS control logic, for example, according to an embodiment described in the Italian patent application IT 10 201 6000111289. The sensor makes it possible to clearly identify when the cyclist is braking, precisely by means of the braking pressure signal. In this way, the control logic is more robust with respect to any false positives.

As is evident from the above description, the actuator device according to the invention is constructively simple and extremely efficient, reliable and safe in operation.

Of course, without prejudice to the principle of the invention, the details of construction and the embodiments may vary widely with respect to those described and illustrated purely by way of example, without departing from the scope of the present invention, as defined by the attached claims.

## Claims

1. An ABS actuator device for a hydraulic braking system of a bicycle, cycle or scooter, comprising:
- an actuator body (6), defining an inner cavity (7), and having an inlet opening (8) and an outlet opening (9) communicating with said cavity (7),
- a floating member (14), slidably mounted within the inner cavity (7) of the actuator body (6),
- a main sealing ring (17), mounted on the floating member (14) and engaged on the wall of said inner cavity (7), so as to define an upstream chamber (15) within said cavity (7), which communicates with said inlet opening (8), and a downstream chamber (16) communicating with said outlet opening (9),
- wherein said inlet (8) and outlet (9) openings are arranged to be hydraulically connected to a pumping device associated with an actuator member of a brake and with a hydraulic brake, respectively,
- said floating member (14) having a body with a passage (18, 19) for hydraulic communication between said upstream chamber (15) and said downstream chamber (16), and being provided with a valve member (20) that cooperates with a valve seat (21) formed in the body of the floating member (14), for controlling said hydraulic communication through said passage (18, 19),
- wherein said valve member (20) is associated with at least one spring (22) tending to keep the valve member engaged against said valve seat (21), in a closed position in which the hydraulic communication between said upstream chamber (15) and said downstream chamber (16) is interrupted,
- said actuator device further comprising an electric motor (M) configured to control the position of the floating member (14) within the cavity (7) of the actuator body (6), in such a way that:
- during normal operation of said brake, said electric motor (M) is inactive and said floating member (14) is in an end position towards the downstream chamber (16), in which the valve member (20) of the floating member (14) interacts with an abutment element (23) of the actuator body (6), which holds the valve member (20) in an open position, spaced apart from said valve seat (21), against the action of said at least one spring (22), so that during normal brake operation, the fluid pumped by the pumping device can flow from said inlet opening (8) to said outlet opening (9), in the direction of the hydraulic brake,
- while in conditions that require the activation of the ABS, said electric motor (M) is configured to be activated and to cause a movement of the floating member (14) in the direction of said upstream chamber and away from said end position, so that the valve member (20) is brought into its closed position by said at least one spring (22), so as to interrupt the communication between the upstream chamber (15) and the downstream chamber (16), the downstream chamber (16) thereby increasing in volume and generating a decrease in the pressure of the fluid supplied to the hydraulic brake,
- wherein said actuator device (2) further comprises a valve device configured to open the communication between the upstream chamber (15) and the downstream chamber (16) when the pressure in the downstream chamber (16) becomes greater than the pressure in the upstream chamber (15), by a differential greater than a predetermined threshold,
said actuator device being **characterized in that**:
- said main sealing ring (17) is not in the form of a sealing ring with a deformable lip, and remains always engaged against the wall of the cavity (7) of the actuator body, so as to always isolate the upstream chamber (15) with respect to the downstream chamber (16), in any operating condition of the brake, and for any position of the floating member (14),
- the valve device configured to open the communication between the upstream chamber (15) and the downstream chamber (16), when the pressure in the downstream chamber (16) becomes greater than the pressure in the upstream chamber (15), is constituted by the valve member (20) associated with the floating member (14),
said valve member (20) being configured in such a way that, when it is in its closed position, with the floating member (14) spaced apart from said end position, the valve member (20) has a surface exposed to the downstream chamber (16), so that a pressure increase in the downstream chamber sufficient to overcome the action of said at least one spring (22) causes the valve member (20) to move away from its valve seat, and the opening of the aforesaid communication.

2. An ABS actuator device according to claim 1, **characterized in that** it is provided with a solenoid valve (30) configured to place the inlet opening (8) of the actuator device (2) in direct communication, when activated, with the outlet opening (9), so that said solenoid valve (30) can be controlled by an electronic control unit of the braking system to establish said communication whenever a malfunction of the actuator device is detected.

3. An ABS actuator device according to claim 1, **characterized in that** it is provided with a pressure sensor (S_{P}) arranged to detect the pressure in said upstream chamber or in said downstream chamber (16).

4. An ABS actuator device according to claim 1, **characterized in that** the aforesaid inlet (8) and outlet (9) openings of the actuator device of the invention are arranged on opposite sides of the body (6) of the actuator device, and are provided with respective connector elements (10, 11) with outlets at 90 degrees with respect to the respective openings (8, 9) in the body (6) of the actuator device, at least one of said connector elements (10, 11) being selectively orientable in different positions in such a way that the two outlets (12, 13) of the connector elements can both be oriented parallel to the axis of the floating member of the actuator device, and both facing towards the same end of the body of the actuator device, or towards opposite ends of the body of the actuator device.

5. An ABS actuator device according to claim 1, **characterized in that** it comprises a screw-and-nut transmission (27, 29) between the electric motor (M) and the floating member (14), including a screw (27) rotatably mounted by means of a rolling bearing (28) within the body (6) of the actuator device and axially locked with respect to said rolling bearing (28) by means of a tightening nut (42), and
**in that** the screw (27) is connected in rotation with the shaft (26) of the electric motor (M) by means of a bushing (38) having an axial hole that includes:
- a first shaped portion (39) for shape-coupling to the crankshaft (26), which has a corresponding shaped conformation,
- a second shaped portion 40, wider than the first portion (39) for shape-coupling to an end nose (27A) of the screw (27), which has a corresponding conformation, and
- a shaped front cavity (41) for shape-coupling to a tightening nut (42), which is screwed onto a threaded portion of the end nose of the screw to lock the inner ring of the bearing (28) against an annular shoulder of the screw (27),
in such a way that the bushing (39) is secured in rotation both with the shaft (26) of the electric motor (M) and with the screw (27), and also with the tightening nut (42), which is thus prevented from unscrewing.

## Patentansprüche

1. ABS-Aktuatorvorrichtung für ein hydraulisches Bremssystem eines Fahrrads, Zweirads oder Rollers, umfassend:
- einen Aktuatorkörper (6), der einen inneren Hohlraum (7) definiert und eine Einlassöffnung (8) sowie eine Auslassöffnung (9) aufweist, die mit dem Hohlraum (7) kommuniziert,
- ein Schwimmelement (14), das verschiebbar innerhalb des inneren Hohlraums (7) des Aktuatorkörpers (6) montiert ist,
- einen Hauptdichtring (17), der auf dem Schwimmelement (14) montiert ist und an der Wand des inneren Hohlraums (7) anliegt, um so eine stromaufwärtige Kammer (15) innerhalb des Hohlraums (7) zu definieren, die mit der Einlassöffnung (8) kommuniziert, und eine stromabwärtige Kammer (16) zu definieren, die mit der Auslassöffnung (9) kommuniziert,
- wobei die Einlass- (8) und die Auslassöffnung (9) angeordnet sind, hydraulisch mit einer Pumpvorrichtung verbunden zu sein, die einem Aktuatorelement einer Bremse bzw. einer hydraulischen Bremse zugeordnet ist,
- wobei das Schwimmelement (14) einen Körper mit einem Durchgang (18, 19) zur hydraulischen Kommunikation zwischen der stromaufwärtigen Kammer (15) und der stromabwärtigen Kammer (16) aufweist und mit einem Ventilelement (20) versehen ist, das mit einem Ventilsitz (21) zusammenwirkt, der in dem Körper des Schwimmelements (14) ausgebildet ist, um die hydraulische Kommunikation durch den Durchgang (18, 19) zu steuern,
- wobei das Ventilelement (20) mit mindestens einer Feder (22) verbunden ist, die dafür sorgt, das Ventilelement in einer geschlossenen Position, in der die hydraulische Kommunikation zwischen der stromaufwärtigen Kammer (15) und der stromabwärtigen Kammer (16) unterbrochen ist, im Eingriff mit dem Ventilsitz (21) zu halten,
- wobei die Aktuatorvorrichtung ferner einen Elektromotor (M) umfasst, der ausgebildet ist, die Position des Schwimmelements (14) innerhalb des Hohlraums (7) des Aktuatorkörpers (6) so zu steuern, dass:
- während eines normalen Betriebs der Bremse der Elektromotor (M) inaktiv ist und das Schwimmelement (14) sich in einer Endposition zu der stromabwärtigen Kammer (16) befindet, in welcher das Ventilelement (20) des Schwimmelements (14) mit einem Anschlagelement (23) des Aktuatorkörpers (6) zusammenwirkt, welches das Ventilelement (20) entgegen der Wirkung der mindestens einen Feder (22) in einer von dem Ventilsitz (21) beabstandeten offene Position hält, so dass im normalen Bremsbetrieb das von der Pumpvorrichtung geförderte Fluid von der Einlassöffnung (8) zu der Auslassöffnung (9) in Richtung der hydraulischen Bremse strömen kann,
- während unter Bedingungen, welche die Aktivierung des ABS erfordern, der Elektromotor (M) ausgebildet ist, aktiviert zu werden und eine Bewegung des Schwimmelements (14) in Richtung der stromaufwärtigen Kammer und von der Endposition weg zu verursachen, so dass das Ventilelement (20) durch die mindestens eine Feder (22) in dessen geschlossene Position gebracht wird, um die Kommunikation zwischen der stromaufwärtigen Kammer (15) und der stromabwärtigen Kammer (16) zu unterbrechen, wodurch die stromabwärtige Kammer (16) im Volumen zunimmt und eine Verringerung des Drucks des der hydraulischen Bremse zugeführten Fluids erzeugt,
- wobei die Aktuatorvorrichtung (2) ferner eine Ventilvorrichtung umfasst, die ausgebildet ist, die Kommunikation zwischen der stromaufwärtigen Kammer (15) und der stromabwärtigen Kammer (16) zu öffnen, wenn der Druck in der stromabwärtigen Kammer (16) größer als der Druck in der stromaufwärtigen Kammer (15) wird, um ein Differenzial, das größer als ein vorgegebener Schwellenwert ist,
wobei die Aktuatorvorrichtung **dadurch gekennzeichnet ist, dass**:
- der Hauptdichtring (17) nicht die Form eines Dichtrings mit verformbarer Lippe aufweist und immer an der Wand des Hohlraums (7) des Aktuatorkörpers anliegt, um die stromaufwärtige Kammer (15) immer hinsichtlich der stromabwärtigen Kammer (16) zu isolieren, und zwar in jedem Betriebszustand der Bremse und für jede Position des Schwimmelements (14),
- die Ventilvorrichtung, welche ausgebildet ist, die Kommunikation zwischen der stromaufwärtigen Kammer (15) und der stromabwärtigen Kammer (16) zu öffnen, wenn der Druck in der stromabwärtigen Kammer (16) größer als der Druck in der stromaufwärtigen Kammer (15) ist, durch das dem Schwimmelement (14) zugeordnete Ventilelement (20) ausgebildet ist,
wobei das Ventilelement (20) so ausgebildet ist, dass in dessen geschlossener Position, wenn das Schwimmelement (14) von der Endposition beabstandet ist, das Ventilelement (20) eine Oberfläche aufweist, die zu der stromabwärtigen Kammer freiliegt (16), so dass ein Druckanstieg in der stromabwärtigen Kammer, der ausreicht, um die Wirkung der mindestens einen Feder (22) zu überwinden, das Ventilelement (20) veranlasst, sich von dessen Ventilsitz zu entfernen und die vorbenannte Kommunikation zu öffnen.

2. ABS-Aktuatorvorrichtung nach Anspruch 1, **dadurch gekennzeichnet, dass** diese mit einem Magnetventil (30) versehen ist, das ausgebildet ist, bei Aktivierung die Einlassöffnung (8) der Aktuatorvorrichtung (2) in direkte Kommunikation mit der Auslassöffnung (9) zu bringen, so dass das Magnetventil (30) von einer elektronischen Steuereinheit des Bremssystems steuerbar ist, um die Kommunikation immer dann herzustellen, wenn eine Fehlfunktion der Aktuatorvorrichtung erkannt wird.

3. ABS-Aktuatorvorrichtung nach Anspruch 1, **dadurch gekennzeichnet, dass** diese mit einem Drucksensor (S_{P}) versehen ist, der angeordnet ist, den Druck in der stromaufwärtigen Kammer oder in der stromabwärtigen Kammer (16) zu erfassen.

4. ABS-Aktuatorvorrichtung nach Anspruch 1, **dadurch gekennzeichnet, dass** die vorbenannten Einlass- (8) und Auslassöffnungen (9) der erfindungsgemäßen Aktuatorvorrichtung auf gegenüberliegenden Seiten des Körpers (6) der Aktuatorvorrichtung angeordnet sind, und mit jeweiligen Anschlusselementen (10, 11) mit Auslässen im 90-Grad-Winkel bezüglich zu den jeweiligen Öffnungen (8, 9) in dem Körper (6) der Aktuatorvorrichtung versehen sind, wobei mindestens eines der Anschlusselemente (10, 11) selektiv in verschiedenen Positionen ausrichtbar ist, so dass die beiden Auslässe (12, 13) der Anschlusselemente beide parallel zu der Achse des Schwimmelements der Aktuatorvorrichtung ausrichtbar sind, und beide dem gleichen Ende des Körpers der Aktuatorvorrichtung oder in Richtung gegenüberliegender Enden des Körpers der Aktuatorvorrichtung zugewandt sind.

5. ABS-Aktuatorvorrichtung nach Anspruch 1, **dadurch gekennzeichnet, dass** diese eine Schrauben-Mutter-Übertragung (27, 29) zwischen dem Elektromotor (M) und dem Schwimmelement (14) umfasst, einschließlich einer Schraube (27), die drehbar mittels eines Wälzlagers (28) innerhalb des Körpers (6) der Aktuatorvorrichtung montiert und hinsichtlich des Wälzlagers (28) mittels einer Spannmutter (42) axial gesichert ist, und
dadurch, dass die Schraube (27) drehbar mit der Welle (26) des Elektromotors (M) mittels einer Buchse (38) verbunden, die ein axiales Loch aufweist, das umfasst:
- einen ersten geformten Abschnitt (39) zur Formkoppelung an die Kurbelwelle (26), die eine entsprechende Konformation aufweist,
- einen zweiten geformten Abschnitt 40, der breiter als der erste Abschnitt (39) ist, zur Formkoppelung mit einer Endnase (27A) der Schraube (27), die eine entsprechende Konformation aufweist, und
- einen geformten vorderen Hohlraum (41) zur Formkopplung mit einer Spannmutter (42), die auf einen Gewindeabschnitt der Endnase der Schraube aufgeschraubt ist, um den Innenring des Lagers (28) gegen eine ringförmige Schulter der Schraube (27) zu sichern,
derart, dass die Buchse (39) sowohl mit der Welle (26) des Elektromotors (M) als auch mit der Schraube (27) und mit der Spannmutter (42) drehend gesichert ist, welche somit am Herausdrehen gehindert wird.

## Revendications

1. Dispositif actionneur d'ABS pour un système de freinage hydraulique d'une bicyclette, d'un cycle ou d'un scooter, comprenant :
- un corps d'actionneur (6), définissant une cavité interne (7), et présentant une ouverture d'entrée (8) et une ouverture de sortie (9) communiquant avec ladite cavité (7),
- un organe flottant (14), monté de manière coulissante à l'intérieur de la cavité interne (7) du corps d'actionneur (6),
- une bague d'étanchéité principale (17), montée sur l'organe flottant (14) et engagée sur la paroi de ladite cavité interne (7), de manière à définir une chambre amont (15) à l'intérieur de ladite cavité (7), qui communique avec ladite ouverture d'entrée (8), et une chambre aval (16) communiquant avec ladite ouverture de sortie (9),
- dans lequel lesdites ouvertures d'entrée (8) et de sortie (9) sont agencées pour être reliées hydrauliquement à un dispositif de pompage associé à un organe actionneur d'un frein et à un frein hydraulique, respectivement,
- ledit organe flottant (14) présentant un corps avec un passage (18, 19) pour une communication hydraulique entre ladite chambre amont (15) et ladite chambre aval (16), et étant pourvu d'un organe de soupape (20) qui coopère avec un siège de soupape (21) formé dans le corps de l'organe flottant (14), pour commander ladite communication hydraulique à travers ledit passage (18, 19),
- dans lequel ledit organe de soupape (20) est associé à au moins un ressort (22) tendant à maintenir l'organe de soupape engagé contre ledit siège de soupape (21), dans une position fermée dans laquelle la communication hydraulique entre ladite chambre amont (15) et ladite chambre aval (16) est interrompue,
- ledit dispositif actionneur comprenant en outre un moteur électrique (M) configuré pour commander la position de l'organe flottant (14) à l'intérieur de la cavité (7) du corps d'actionneur (6), de telle sorte que :
- pendant le fonctionnement normal dudit frein, ledit moteur électrique (M) est inactif et ledit organe flottant (14) est dans une position d'extrémité vers la chambre aval (16), dans lequel l'organe de soupape (20) de l'organe flottant (14) interagit avec un élément de butée (23) du corps d'actionneur (6), qui maintient l'organe de soupape (20) dans une position ouverte, espacée dudit siège de soupape (21), à l'encontre de l'action dudit au moins un ressort (22), de sorte que pendant le fonctionnement normal du frein, le fluide pompé par le dispositif de pompage peut s'écouler depuis ladite ouverture d'entrée (8) vers ladite ouverture de sortie (9), dans la direction du frein hydraulique,
- sous des conditions qui nécessitent l'activation de l'ABS, ledit moteur électrique (M) est configuré pour être activé et pour provoquer un mouvement de l'organe flottant (14) dans la direction de ladite chambre amont et à l'opposé de ladite position d'extrémité, de sorte que l'organe de soupape (20) est amené dans sa position fermée par ledit au moins un ressort (22), de manière à interrompre la communication entre la chambre amont (15) et la chambre aval (16), la chambre aval (16) augmentant ainsi en volume et générant une diminution de la pression du fluide fourni au frein hydraulique,
- dans lequel ledit dispositif actionneur (2) comprend en outre un dispositif de soupape configuré pour ouvrir la communication entre la chambre amont (15) et la chambre aval (16) lorsque la pression dans la chambre aval (16) devient supérieure à la pression dans la chambre amont (15), par un différentiel supérieur à un seuil prédéterminé,
ledit dispositif actionneur étant **caractérisé en ce que** :
- ladite bague d'étanchéité principale (17) n'est pas sous la forme d'une bague d'étanchéité à lèvre déformable, et reste toujours engagée contre la paroi de la cavité (7) du corps d'actionneur, de manière à toujours isoler la chambre amont (15) par rapport à la chambre aval (16), dans n'importe quelle condition de fonctionnement du frein, et pour toute position de l'organe flottant (14),
le dispositif de soupape configuré pour ouvrir la communication entre la chambre amont (15) et la chambre aval (16), lorsque la pression dans la chambre aval (16) devient supérieure à la pression dans la chambre amont (15), est constitué par l'organe de soupape (20) associé à l'organe flottant (14),
ledit organe de soupape (20) étant configuré de telle sorte que, lorsqu'il est dans sa position fermée, avec l'organe flottant (14) espacé de ladite position d'extrémité, l'organe de soupape (20) présente une surface exposée à la chambre aval (16), de sorte qu'une augmentation de pression dans la chambre aval suffisante pour surmonter l'action dudit au moins un ressort (22) amène l'organe de soupape (20) à s'éloigner de son siège de soupape, et l'ouverture de la communication précitée.

2. Dispositif actionneur d'ABS selon la revendication 1, **caractérisé en ce qu'**il est pourvu d'une électrovanne (30) configurée pour placer l'ouverture d'entrée (8) du dispositif actionneur (2) en communication directe, lorsqu'elle est activée, avec l'ouverture de sortie (9), de sorte que ladite électrovanne (30) puisse être commandée par une unité de commande électronique du système de freinage pour établir ladite communication chaque fois qu'un dysfonctionnement du dispositif actionneur est détecté.

3. Dispositif actionneur d'ABS selon la revendication 1, **caractérisé en ce qu'**il est pourvu d'un capteur de pression (S_{P}) agencé pour détecter la pression dans ladite chambre amont ou dans ladite chambre aval (16).

4. Dispositif actionneur d'ABS selon la revendication 1, **caractérisé en ce que** les ouvertures d'entrée (8) et de sortie (9) précitées du dispositif actionneur de l'invention sont agencées sur des côtés opposés du corps (6) du dispositif actionneur, et sont pourvues d'éléments connecteurs respectifs (10, 11) avec des sorties à 90 degrés par rapport aux ouvertures respectives (8, 9) dans le corps (6) du dispositif d'actionneur, au moins l'un desdits éléments connecteurs (10, 11) étant orientable sélectivement dans différentes positions de telle sorte que les deux sorties (12, 13) des éléments connecteurs puissent toutes deux être orientées parallèlement à l'axe de l'organe flottant du dispositif actionneur, et les deux faisant face à la même extrémité du corps du dispositif actionneur, ou vers des extrémités opposées du corps du dispositif actionneur.

5. Dispositif actionneur d'ABS selon la revendication 1, **caractérisé en ce qu'**il comprend une transmission à vis et écrou (27, 29) entre le moteur électrique (M) et l'organe flottant (14), comportant une vis (27) montée rotative au moyen d'un palier à roulement (28) à l'intérieur du corps (6) du dispositif actionneur et verrouillée axialement par rapport audit palier à roulement (28) au moyen d'un écrou de serrage (42), et
**en ce que** la vis (27) est reliée en rotation à l'arbre (26) du moteur électrique (M) au moyen d'une douille (38) présentant un trou axial qui comporte :
- une première partie (39) formée pour être couplée en forme au vilebrequin (26), qui a une conformation correspondante,
- une deuxième partie formée 40, plus large que la première partie (39) pour être couplée en forme à un nez d'extrémité (27A) de la vis (27), qui présente une conformation correspondante, et
- une cavité avant profilée (41) pour être couplée en forme à un écrou de serrage (42), qui est vissé sur une partie filetée du nez d'extrémité de la vis pour verrouiller la bague interne du palier (28) contre un épaulement annulaire de la vis (27),
de telle sorte que la douille (39) est fixée en rotation à la fois avec l'arbre (26) du moteur électrique (M) et avec la vis (27), et également avec l'écrou de serrage (42), dont le dévissage est ainsi empêché.
